# EUROPÄISCHE PATENTSCHRIFT

(11) **EP 2 612 051 B1**
(45) Veröffentlichungstag und Bekanntmachung des Hinweises auf die Patenterteilung: **18.01.2017**
(21) Anmeldenummer: 11752124.5
(22) Anmeldetag: 31.08.2011
(51) Int. Cl.: F16D 23/06

(54) **TRANSMITTER MIT VORMONTIERTEN SYNCHRONRINGEN**
TRANSMITTER WITH PREASSEMBLED SYNCHRONIZING RINGS
TRANSMETTEUR À BAGUES DE SYNCHRONISATION PRÉ-ASSEMBLÉES

(30) Priorität: 03.09.2010 DE 102010036278
(43) Veröffentlichungstag der Anmeldung: 10.07.2013
(73) Patentinhaber: Hoerbiger Antriebstechnik Holding GmbH, 86956 Schongau (DE)
(72) Erfinder: BINDER, Jürgen, 88367 Hohentengen (DE); SCHNELZER, Thomas, 86971 Peiting (DE); ECHTLER, Peter, 86972 Bernbeuren (DE); KÖLZER, Michael, 87672 Rosshaupten (DE); KRAMER, Peter, 87784 Westerheim (DE)
(74) Vertreter: Prinz & Partner mbB
(86) Internationale Anmeldenummer: PCT/EP2011/004402
(87) Internationale Veröffentlichungsnummer: WO 2012/028316

(56) Entgegenhaltungen:
- EP-A1- 1 239 175
- EP-A2- 0 272 103
- WO-A1-2011/029558
- AT-B- 136 064
- DE-A1- 4 324 814
- DE-A1- 19 701 538
- DE-A1- 19 740 305
- DE-B1- 2 754 382
- FR-A- 907 307
- FR-A- 1 124 130

## Beschreibung

Die Erfindung betrifft einen Transmitter für eine Synchronisierungsbaugruppe eines Schaltgetriebes.

Bei Schaltgetrieben, wie sie insbesondere bei Kraftfahrzeugen verwendet werden, dient die Synchronisierungsbaugruppe dazu, eine drehfeste Verbindung zwischen einer Getriebewelle und einem als Losrad auf der Getriebewelle angeordneten Gang- oder Zahnrad herzustellen. In einem ersten Schritt des Schaltvorgangs sorgt die Synchronisierungsbaugruppe dafür, dass die Drehzahl des zu schaltenden Gangrades an die Drehzahl der Getriebewelle angeglichen wird. In einem zweiten Schritt wird dann eine drehfeste Verbindung zwischen der Getriebewelle und dem Gangrad hergestellt. Der entsprechende Gang ist dann geschaltet.

Allgemein bekannt sind Synchronisierungsbaugruppen, die als wesentliche Bauteile eine Synchronnabe, darin aufgenommene Druckstücke, Synchronringe sowie eine Schaltmuffe aufweisen. Bei Betätigung der Schaltmuffe wird einer der Synchronringe über die Druckstücke gegen eine Reibfläche gedrückt, die dem zu schaltenden Gangrad zugeordnet ist. Wenn die Drehzahl des Gangrades mit der Drehzahl der Getriebewelle synchronisiert ist, kann die Schaltmuffe vollständig durchgeschaltet werden, sodass sie in eine dem Gangrad zugeordnete Verzahnung eingreift. Auf diese Weise ist eine drehfeste Verbindung von der Synchronnabe zum Gangrad hergestellt.

Ein gattungsgemäße Synchronisierungsbaugruppe ist beispielsweise aus EP 1 239175 A1 bekannt. Offenbart wir ein Transmitter in einer Synchronisiereinrichtung eines Schaltgetriebes, mit einer zweiteiligen Schaltmuffe, mit verdrehfest auf einer Getriebeachse sitzenden Reibringen und mit federbelasteten Kugeln, die auf der Schaltmuffe angeordnet sind und in axialer Richtung eine Vorsynchronisierungskraft auf die Reibringe ausüben.

EP 0 272 103 A2 beschreibt eine Synchronisierungsbaugruppe, bestehend aus einer Schaltmuffe und einem Synchronring, mit einer internen konischen Reibfläche zur Zusammenwirkung mit einer konischen Reibfläche der Schaltmuffe, wobei die Reibflächen axial in Bezug aufeinander verschoben werden können. Die Synchronringe sind durch Federn derart vorbelastet, dass die axiale Bewegung der Synchronringe während eines Schaltvorgangs der Schaltmuffe eingegrenzt wird.

Ein Transmitter für eine Synchronisierungsbaugruppe ist z.B. aus DE 27 54 382 B1 bekannt.

Nachteilig bei den bekannten Synchronisierungsbaugruppen ist der sehr aufwendige und teilweise auch sehr voluminöse Aufbau. Die Aufgabe der Erfindung besteht darin, das Synchronisieren und Schalten von Gängen eines Schaltgetriebes mit geringerem Aufwand zu ermöglichen.

Nach der vorliegende Erfindung wird ein Transmitter für eine Synchronisierungsbaugruppe eines Schaltgetriebes gemäß Anspruch 1 bereitgestellt, mit einer Transmitterscheibe, einem Druckstück, einer Feder, die mit dem Druckstück zusammenwirkt, und mindestens einem Synchronring, wobei das Druckstück von der Feder so beaufschlagt wird, dass der Transmitter in axialer Richtung eine Vorsynchronisierkraft auf den Synchronring übertragen kann. Auf diese Weise ist eine vormontierbare Baugruppe geschaffen, die dann in ein Schaltgetriebe eingebaut werden kann und bereits die wesentlichen Funktionsteile enthält. Der Synchronring sorgt für den notwendigen Drehzahlangleich zwischen Getriebewelle und Gangrad, bevor die drehfeste Verbindung zwischen der Getriebewelle und dem Gangrad hergestellt wird. Das Druckstück gewährleistet die sogenannte Vorsynchronisierung und fixiert den Synchronring in einer Neutralstellung, sodass unerwünschte Schleppmomente verringert oder beseitigt sind.

Der Synchronring ist mit mindestens einem Mitnehmer versehen ist, an dem eine Sperrfläche ausgebildet ist, die in Umfangsrichtung mit dem Transmitter zusammenwirken kann. Auf diese Weise wird in den Synchronring die Sperrfunktion integriert, die ein Durchschalten des Transmitters verhindert, solange die Drehzahlen des Gangrades und der Getriebewelle noch nicht synchronisiert sind.

Der Synchronring ist mit Vorsynchronisierschräge versehen ist, an der das Druckstück unter der Wirkung der Feder angreifen kann. Die Vorsynchronisierschräge bewirkt die Fxierung des Synchronrings in einer Neutralstellung, ermöglicht aber gleichzeitig das Durchschalten des Transmitters, indem sie das Druckstück entgegen der Wirkung der Feder verschiebt, wenn der Transmitter durchgeschaltet wird.

Die Vorsynchronisierschräge sind an dem Mitnehmer ausgebildet ist. Auf diese Weise ergibt sich ein sehr kompakter Aufbau. Das Druckstück ist in Umfangsrichtung und in axialer Richtung im Transmitter geführt ist. Auch dies führt zu einem kompakten Aufbau des Transmitters.

Das Druckstück ist in einer Ausnehmung angeordnet, die in radialer Richtung einwärts geöffnet ist, und dass sich die Feder an einem Widerlager abstützt, das separat vom Transmitter ausgeführt ist. Ein in radialer Richtung einwärts, also zur Mittelachse der Getriebewelle hin, geöffneter Transmitter erleichtert die Montage des Druckstücks im Transmitter.

Gemäß einer Variante kann vorgesehen sein, dass das Widerlager ein Clip ist, der am Transmitter eingehängt ist. Mit dem Clip kann in technisch einfacher Weise die Öffnung im Transmitter geschlossen und gleichzeitig das Widerlager für die Feder gebildet werden.

Gemäß einer anderen Variante ist vorgesehen, dass das Widerlager ein Haltering ist, der in den Transmitter eingesetzt ist. Diese Gestaltung zeichnet sich durch besonders wenig Einzelteile aus, da die Öffnungen für die Montage aller Druckstücke durch ein einzige Bauteil verschlossen werden kann, nämlich den Haltering.

Gemäß einer anderen Ausführungsform ist vorgesehen, dass das Druckstück in einer Ausnehmung angeordnet ist, die in radialer Richtung einwärts geöffnet ist, und dass die Feder als Federring ausgeführt ist, der in den Transmitter eingesetzt ist. Bei dieser Gestaltung ergibt sich ein noch einfacherer Aufbau, da die separaten Federn für die Druckstücke eingespart werden.

Vorzugsweise ist vorgesehen, dass am Transmitter zwei Synchronringe angebracht sind. Dies ermöglicht, durch Betätigen des Transmitters in der einen oder der anderen Richtung zwei Gangstufen des Getriebes zu schalten.

Gemäß einer Ausführungsform der Erfindung ist vorgesehen, dass die beiden Vorsynchronisierschrägen der Synchronringe in axialer Richtung schräg angestellt sind, dass die beiden Synchronringe miteinander in axialer Richtung verbunden sind und dass das Druckstück in einer Ausgangsstellung an den beiden Vorsynchronisierschrägen anliegt. Diese Ausgestaltung zeichnet sich durch einen einfachen Aufbau, geringe Schleppmomente aufgrund der axialen Koppelung der Synchronringe, einen geringen Bauraumbedarf und eine einfache Montage aus.

Bei dieser Ausführungsform kann an jedem der Synchronringe mindestens eine Verbindungslasche vorgesehen sein, mittels denen die beiden Synchronringe formschlüssig miteinander verbunden sind. Dies erleichtert die Vormontage der Synchronringe am Transmitter, da die Verbindungslaschen durch Verbindungsöffnungen des Transmitters hindurchgesteckt werden können. Sobald die beiden Synchronringe formschlüssig miteinander verbunden sind, können sie vom Transmitter nicht mehr gelöst werden.

Gemäß einer alternativen Ausführungsform ist vorgesehen, dass die beiden Synchronringe in Umfangsrichtung verdrehbar am Transmitter angebracht sind, dass sie zwei einander gegenüberliegend angeordnete Mitnehmer aufweisen, an denen jeweils zwei Sperrflächen vorgesehen sind, und dass das Druckstück die beiden Mitnehmer in Umfangsrichtung auseinanderdrückt, sodass die beiden Mitnehmer in entgegengesetzten Richtungen am Transmitter anliegen. Auch diese Ausführungsform zeichnet sich durch einen einfachen Aufbau, einen geringen Bauraumbedarf und eine einfache Montage aus.

Dabei ist vorzugsweise vorgesehen, dass jeder Synchronring mit vier Mitnehmern versehen ist. Auf diese Weise lassen sich die Synchronringe in axialer Richtung präzise am Mitnehmer führen.

Vorzugsweise ist vorgesehen, dass an jedem Mitnehmer zwei Löseschrägen angeordnet sind, die in axialer Richtung von den Sperrflächen beabstandet sind. Die Löseschrägen gewährleisten, dass der entsprechende Synchronring wieder von einer ihm zugeordneten Reibfläche gelöst wird, wenn der Transmitter aus der durchgeschalteten Stellung in die Neutralstellung zurückgeschoben wird.

Die Erfindung wird nachfolgend anhand verschiedener Ausführungsformen beschrieben, wobei nur die dritte bis fünfte Ausführungsform erfindungsgemässe Transmitter darstellen. Die verschiedenen Ausführungsformen sind in den beigefügten Zeichnungen dargestellt. In diesen zeigen:
- Figur 1 in einem Schnitt schematisch eine Synchronisierungsbaugruppe mit einem Transmitter gemäß einer ersten Ausführungsform ;
- Figur 2 in einer Explosionsansicht die Synchronisierungsbaugruppe von Figur 1;
- Figur 3 in einer perspektivischen Ansicht den Transmitter mit daran angebrachten Synchronringen;
- Figur 4 in einer perspektivischen Ansicht die Synchronringe von Figur 3;
- Figur 5 in einer perspektivischen Ansicht den Transmitter von Figur 3;
- Figur 6 einen Schnitt entlang der Ebene VI-VI von Figur 1;
- Figur 7 einen Schnitt entlang der Ebene VII von Figur 6;
- Figur 8 einen Schnitt entlang der Ebene VIII von Figur 6;
- Figur 9 in einem Schnitt eine Synchronisierungsbaugruppe mit einem Transmitter gemäß einer zweiten Ausführungsform ;
- Figur 10 den Transmitter mit daran angebrachten Synchronringen von Figur 9 in einer perspektivischen Ansicht;
- Figur 11 in einer vergrößerten Teilansicht den Transmitter von Figur 9;
- Figur 12 in einer Explosionsansicht die Synchronringe und das Druckstück des Transmitters von Figur 10;
- Figur 13 in einer Explosionsansicht einen erfindungsgemässen Transmitter gemäß einer dritten Ausführungsform;
- Figur 14 den Transmitter von Figur 13 in einem Längsschnitt;
- Figur 15 den Transmitter von Figur 13 in einem Querschnitt;
- Figur 16 den Transmitter von Figur 13 in einer perspektivischen Ansicht;
- Figur 17 in einem Querschnitt einen erfindungsgemässen Transmitter gemäß einer vierten Ausführungsform;
- Figur 18 den Transmitter von Figur 17 in einem Längsschnitt;
- Figur 19 den Transmitter von Figur 17 in einer perspektivischen Schnittansicht;
- Figur 20 in in einem Querschnitt einen erfindungsgemässen Transmitter gemäß einer fünften Ausführungsform;
- Figur 21 den Transmitter von Figur 20 in einem Längsschnitt;
- Figur 22 den Transmitter von Figur 20 in einer perspektivischen Schnittansicht;
- Figur 23 in einem Schnitt eine Synchronisierungsbaugruppe mit einem Transmitter gemäß einer sechsten Ausführungsform ;
- Figur 24 in einer perspektivischen Ansicht die miteinander gekoppelten Synchronringe für den Transmitter von Figur 23;
- Figur 25 in einer vergrößerten Teilansicht den Transmitter von Figur 23; und
- Figur 26 in einer Explosionsansicht die Synchronringe und das Druckstück des Transmitters von Figur 23.

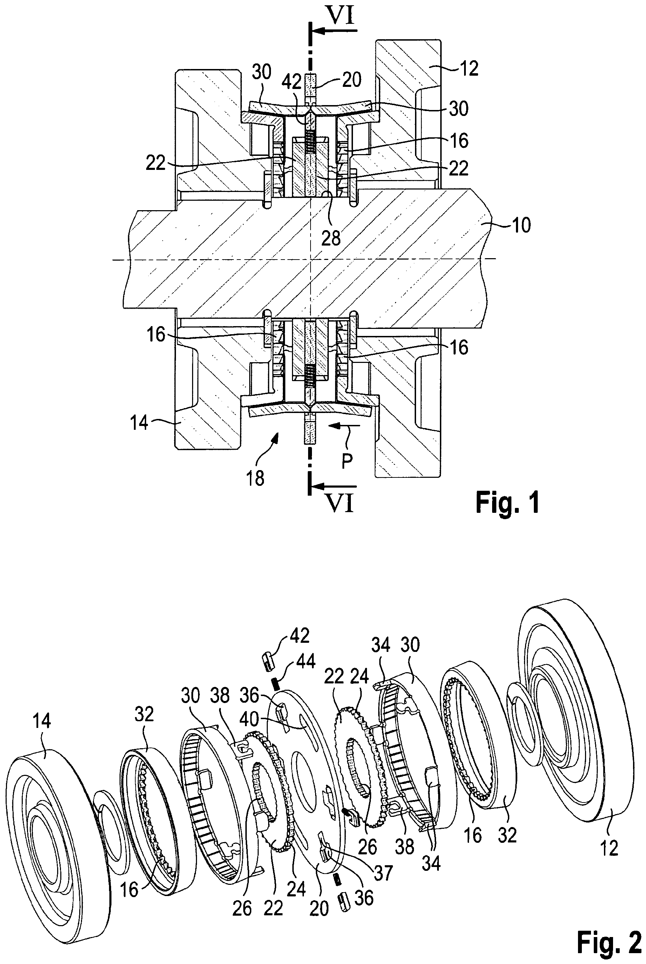

Anhand der Figuren 1 bis 8 wird nachfolgend der grundsätzliche Aufbau einer Synchronisierungsbaugruppe für ein Schaltgetriebe beschrieben, wobei in der Synchronisierungsbaugruppe ein Transmitter gemäß einer ersten Ausführungsform verwendet wird.

Das Getriebe enthält eine Getriebewelle 10, auf der zwei Gangräder 12, 14 angeordnet sind. Die beiden Gangräder 12, 14 sind als Losräder ausgeführt, können sich also relativ zur Getriebewelle drehen. Drehfest mit jedem Gangrad 12, 14 ist eine Kupplungsverzahnung 16 verbunden.

Zwischen den beiden Gangrädern 12, 14 ist ein Transmitter 18 angeordnet, der hier durch eine Transmitterscheibe 20 und zwei Kupplungsscheiben 22 gebildet ist. Die beiden Kupplungsscheiben 22 sind auf der einen und der anderen Seite der Transmitterscheibe 20 angeordnet und weisen eine Außenverzahnung 24 sowie eine Innenverzahnung 26 auf. Die Außenverzahnung 24 ist komplementär zur Kupplungsverzahnung 16 ausgeführt, und die Innenverzahnung 26 steht mit einer Getriebewellen-Verzahnung 28 in Eingriff. Somit sind die Kupplungsscheiben 22 in Umfangsrichtung drehfest mit der Getriebewelle 10 gekoppelt, können jedoch in axialer Richtung auf der Getriebewelle verschoben werden.

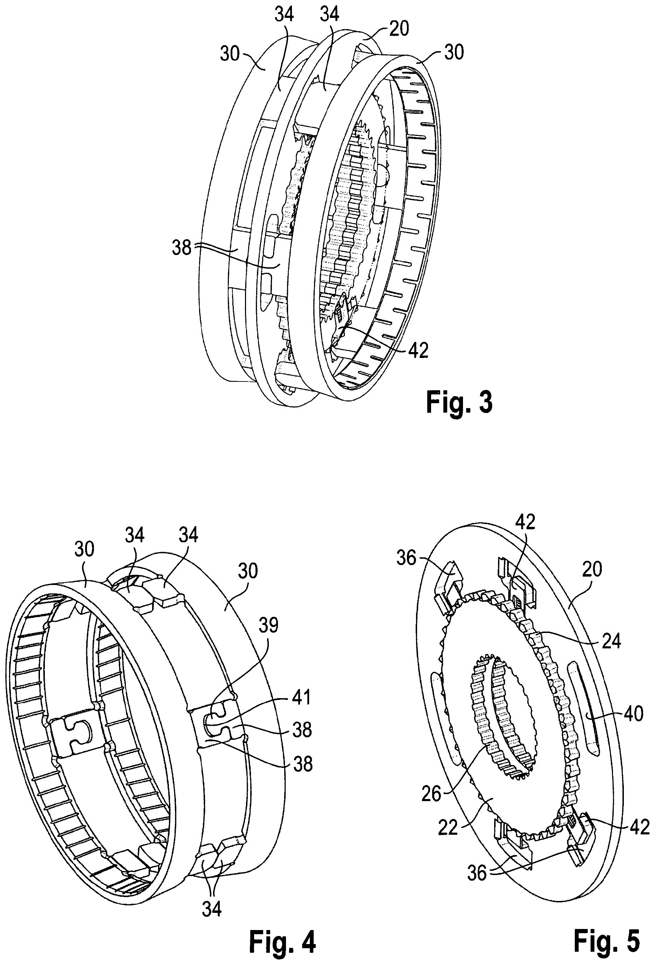

Auf der einen und der anderen Seite der Transmitterscheibe 20 ist jeweils ein Synchronring 30 angeordnet, der mit einer Reibfläche 32 zusammenwirken kann, die dem entsprechenden Gangrad 12 bzw. 14 zugeordnet ist. Die beiden Synchronringe weisen mehrere Mitnehmer 34 auf, die sich in Ausnehmungen 36 in der Transmitterscheibe 20 erstrecken, sowie zwei einander diametral gegenüberliegende Verbindungslaschen 38, die sich durch Verbindungsöffnungen 40 in der Transmitterscheibe 20 hindurch erstrecken (siehe insbesondere Figur 3). Die Verbindungslaschen 38 dienen dazu, die beiden Synchronringe in axialer Richtung miteinander zu koppeln. Im gekoppelten Zustand (siehe Figur 4) liegen die freien Enden der Mitnehmer 34 der beiden Synchronringe 30 einander eng gegenüber.

Um die beiden Synchronringe miteinander zu verbinden, ist einer der Synchronringe mit einem Verbindungsvorsprung 39 ausgebildet, der in eine Verbindungsöffnung 41 der anderen Verbindungslasche 38 eingreift. Auf diese Weise ist eine formschlüssige Verbindung an zwei einander diametral gegenüberliegenden Punkten der beiden Synchronringe erhalten, die ähnlich wie die Verbindung zwischen zwei Puzzlestücken ausgeführt ist. Bei dieser Gestaltung ist ferner vorteilhaft, dass die beiden Synchronringe identisch ausgeführt werden können.

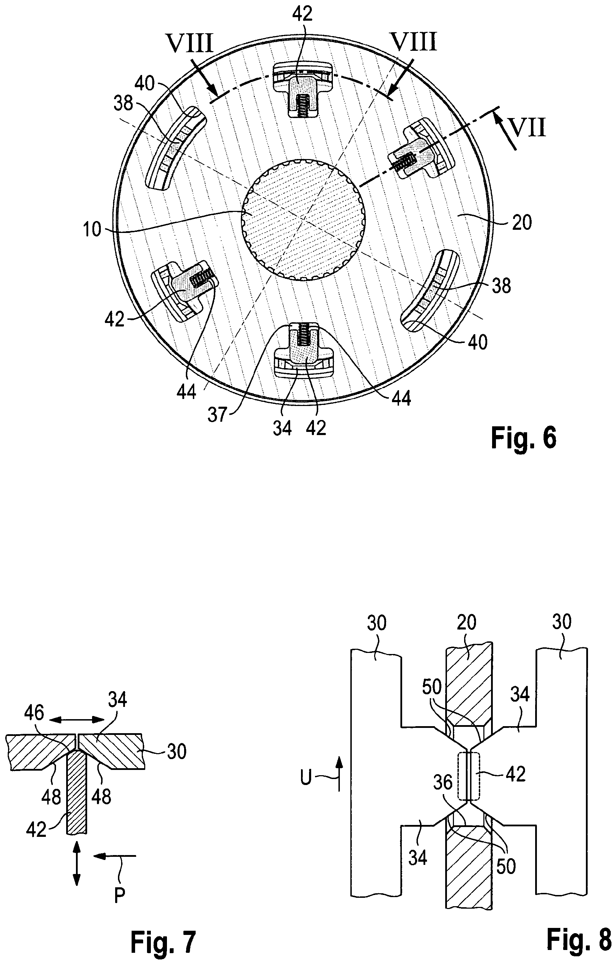

Am Boden jeder der Ausnehmungen 36 ist eine Tasche 37 ausgebildet, in der ein Druckstück 42 (siehe insbesondere die Figuren 5 und 6) angeordnet ist, das jeweils von einer Feder 44 in radialer Richtung nach außen beaufschlagt wird. Das Druckstück ist somit in Umfangsrichtung zwischen den Seitenrändern der Tasche 37 und in axialer Richtung zwischen den beiden Kupplungsscheiben 22 geführt.

Am radial außen liegenden Ende jedes Druckstücks ist eine Vorsynchronisierfläche 46 gebildet, die an Vorsynchronsierschrägen 48 anliegt, die an den freien Enden der Mitnehmer 34 auf der radial innen liegenden Seite gebildet sind (siehe Figur 7). Die Vorsynchronsierschrägen 48 der einander gegenüberliegenden Mitnehmer 34 sind so ausgerichtet, dass ein V mit großem Öffnungswinkel gebildet ist, dessen Spitze radial nach außen zeigt.

An den Mitnehmern 34 sind Sperrflächen 50 gebildet, die in Umfangsrichtung gesehen den Rändern der Ausnehmung 36 schräg ausgerichtet gegenüberliegen. Auch hier bilden die Sperrflächen 50 an den einander gegenüberliegenden Mitnehmern 34 ein V, wobei die Spitze der beiden V der einander gegenüberliegenden Mitnehmer zur Mitte der Ausnehmung 36 gerichtet ist.

Die beschriebene Synchronisierungsbaugruppe arbeitet in der folgenden Weise: Wenn ein Gang geschaltet werden soll, beispielsweise derjenige, der das Gangrad 14 enthält, wird der Transmitter 18 mittels einer (nicht gezeigten) Schaltgabel in der Richtung des Pfeils P von Figur 1 in axialer Richtung auf der Getriebewelle 10 verschoben. In einem ersten Schritt, der Vorsynchronisierung genannt wird, werden die beiden Synchronringe 30 von den Druckstücken 42, genauer gesagt von der an der linken Vorsynchronisierschräge 48 des linken Synchronrings 30 angreifenden Vorsynchronisierfläche 46 des Druckstücks 42, nach links mitgenommen, sodass der Synchronring 30 in Reibeingriff mit der Reibfläche 32 gelangt.

Üblicherweise entspricht die Drehzahl der Getriebewelle 10 nicht der Drehzahl der Gangräder, sodass eine Drehzahldifferenz zwischen dem Synchronring 30 und der Reibfläche 32 vorliegt. Dies führt dazu, dass der Synchronring in Umfangsrichtung mitgenommen wird (siehe der Pfeil U in Figur 8), wodurch die Sperrfläche 50 in Anlage am bezüglich Figur 8 oberen Rand der Ausnehmung 36 gelangt. Aufgrund der schrägen Ausrichtung der Sperrfläche 50 wird dadurch eine Kraftkomponente erzeugt, die eine Verschiebung der Transmitterscheibe 20 relativ zum Mitnehmer 34 verhindert; solange eine Drehzahldifferenz vorliegt, führt das daraus resultierende Reibmoment dazu, dass die Sperrfläche 50 gegen den Rand der Ausnehmung 36 gedrückt bleibt. Der Synchronring stützt sich dabei auf der Reibfläche 32 ab und kann nicht weiter in axialer Richtung verschoben werden.

Erst wenn die Drehzahldifferenz abgebaut ist, sinkt die von der Sperrfläche 50 ausgeübte Sperrkraft ab, sodass der Rand der Ausnehmung 36 der Transmitterscheibe 20 die Sperrfläche 50, aufgrund ihrer schrägen Ausrichtung, in Umfangsrichtung entgegengesetzt zur Richtung des Pfeils U verschieben kann, was ein Durchschalten des Transmitters ermöglicht. Gleichzeitig werden die Druckstücke 42 von den schräg angestellten Vorsynchronisierschrägen 48 entgegen der Wirkung der Feder 44 nach unten eingefedert, also überdrückt. Dadurch kann der Transmitter axial so weit verschoben werden, dass die Außenverzahnung 24 der Kupplungsscheibe 22 in die Kupplungsverzahnung 16 eingreift, die dem Gangrad 14 zugeordnet ist. Auf diese Weise ist eine drehfeste Verbindung zwischen der Getriebewelle 10 und dem zu schaltenden Gangrad 14 hergestellt.

Zum Lösen des geschalteten Gangs wird der Transmitter 18 in entgegengesetzter Richtung in seine Mittelstellung zurückverschoben, wodurch auch die beiden Synchronringe 30 wieder in eine Mittelstellung zurückgestellt werden. In dieser ist der Reibeingriff mit den Reibflächen 32 aufgehoben.

Der besondere Vorteil der ersten Ausführungsform besteht darin, dass ein einfach aufgebautes Druckstück verwendet werden kann, das in einfacher Weise zwischen den beiden Kupplungsscheiben 22 des Transmitters 18 und in der Tasche 37 geführt ist. Ferner ist ein Transmitter 18 erhalten, an dem die Synchronringe 30 in einfacher Weise vormontiert werden können. Das Druckstück 42 hält sie in einer Mittelstellung an der Transmitterscheibe 20, in der die Formschlussgestaltung an den beiden Verbindungslaschen 38 innerhalb der Verbindungsöffnungen 40 liegen, sodass sie sich nicht voneinander lösen können.

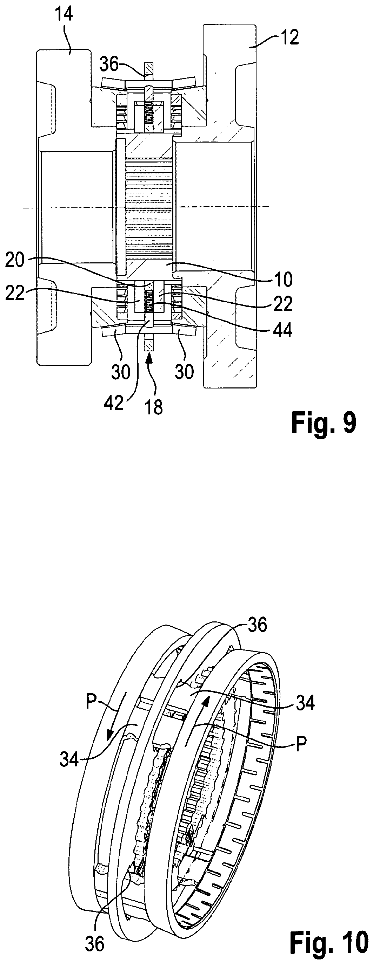

Anhand der Figuren 9 bis 12 wird nun ein Transmitter gemäß einer zweiten Ausführungsform beschrieben. Für die Bauteile, die von der obigen Ausführungsform bekannt sind, werden dieselben Bezugszeichen verwendet, und es wird insoweit auf die vorangegangenen Erläuterungen verwiesen.

Der wesentliche Unterschied zwischen der ersten und der zweiten Ausführungsform besteht darin, dass bei der zweiten Ausführungsform die beiden Synchronringe 30 nicht fest in axialer Richtung miteinander gekoppelt sind, sondern relativ zueinander verschiebbar sind. Jeder Synchronring weist vier Mitnehmer 34 auf, die paarweise miteinander zusammenwirken. Zu diesem Zweck erstrecken sie sich durch die Ausnehmung 36 der Transmitterscheibe 20 des Transmitters 18 hindurch. Mittig zwischen den sich durch eine Ausnehmung 36 hindurch erstreckenden Mitnehmern 34 ist das Druckstück 42 angeordnet, das von der Feder 44 radial nach außen beaufschlagt wird. An seiner von der Feder 44 abgewandten Seite ist das Druckstück 42 abgerundet ausgeführt, sodass sich die Spitze des Druckstücks zwischen den beiden Mitnehmern 34 befindet und diese in entgegengesetzten Richtungen auseinanderdrückt (siehe die Pfeile P in Figur 10). Der Seitenrand jedes Mitnehmers 34, der gegen den Rand der Ausnehmung 36 gedrückt wird, ist mit den beiden Sperrflächen 50 versehen, die hier schräg aneinandergrenzend angeordnet sind, so dass ein spitzes V gebildet ist. Somit sind die beiden Synchronringe 30 in der Ausgangsstellung des Transmitters an diesem dadurch fixiert, dass die beiden Sperrflächen 50 der insgesamt vier Mitnehmer 34 jedes Synchronrings gegen den Rand der Ausnehmung 36 gedrückt werden.

Wenn der Transmitter zum Schalten eines Gangs betätigt wird, nimmt er über die Sperrflächen 50 unmittelbar die beiden Synchronringe 30 mit, bis einer von ihnen auf die ihm zugeordnete Reibfläche 32 auftrifft. Aufgrund der Drehzahldifferenz zwischen der Getriebewelle und dem zu schaltenden Gangrad wird ein Reibmoment erzeugt, welches den entsprechenden Synchronring 30 so relativ zur Transmitterscheibe 20 des Transmitters 18 zu verdrehen sucht, dass dessen V-förmige Vertiefung zwischen den beiden Sperrflächen 50 fester gegen den Rand der Ausnehmung 36 gedrückt wird. Auf diese Weise wird eine Sperrwirkung erzeugt, die das Durchschalten des Transmitters verhindert, solange die Drehzahlen der Getriebewelle und des Gangrades nicht synchronisiert sind.

Im Prinzip muss bzgl. der Übertragung der Schaltkräfte von der Wirkrichtung der Reibmomente unterschieden werden. Im ersten Fall wirkt das Reibmoment in derselben Richtung, wie die Mitnehmer der Synchronringe an den Sperrflächen anliegen. D.h. die Schaltkräfte werden direkt über die Sperrflächen und die Mitnehmer des aktiven Synchronrings eingeleitet. Im zweiten Fall wirkt das Reibmoment in die entgegengesetzten Richtung. Dabei werden die Mitnehmer des aktiven Synchronrings gegen den passiven Synchronring verdreht. Das Druckstück wird dabei nach Innen verdrängt, wobei die Schaltkräfte über die Mitnehmer des passiven Synchronrings in den aktiven Synchronring eingeleitet werden. D.h. Die Sperrfunktion wird also durch die Mitnehmer des passiven Synchronrings sichergestellt.

Erst wenn kein Reibmoment mehr vorhanden ist, gelingt es der Transmitterscheibe 20, den entsprechenden Synchronring 30 über die Sperrfläche 50 etwas zu verdrehen, sodass der Rand der Ausnehmung 36 von den beiden Sperrflächen 50 gelöst wird und in axialer Richtung auf den Mitnehmer 34 gleiten kann. Dabei werden die beiden Synchronringe 30 relativ zueinander so verdreht, dass einer der beiden in einer Ausnehmung 36 angeordneten Mitnehmer an den anderen Mitnehmer angenähert wird. Dabei wird das Druckstück 42 entgegen der Wirkung der Feder 44 elastisch nach unten verschoben. Gegen Ende der Durchschaltbewegung gelangt die Transmitterscheibe 20 in den Bereich einer Löseschräge 60, die in axialer Richtung betrachtet auf der einen und der anderen Seite der beiden Sperrflächen 50 angeordnet sind.

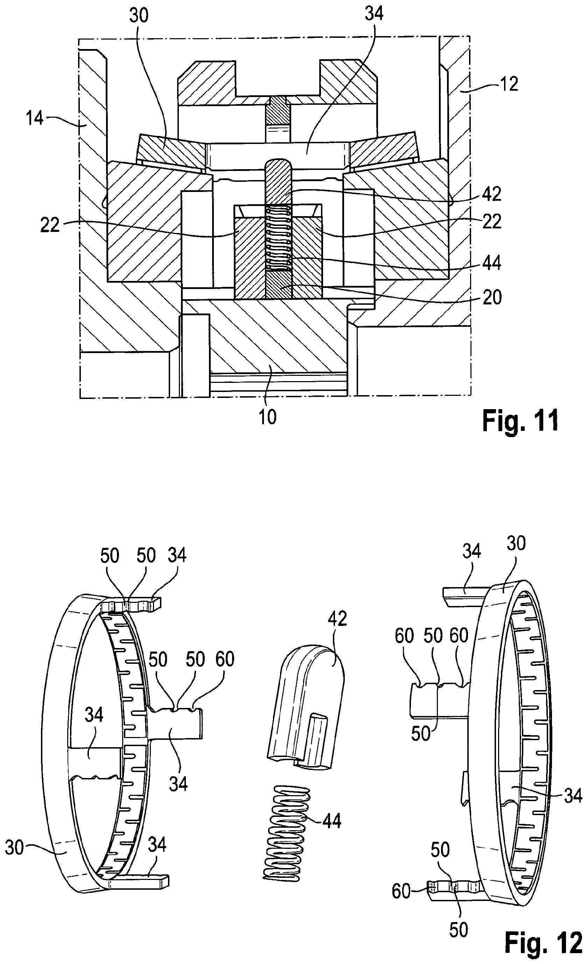

Wenn der Transmitter von der in den Figuren 9 und 11 gezeigten Neutralstellung in die durchgeschaltete Stellung verschoben wird, verbleibt derjenige Synchronring 30, der nicht auf eine Reibfläche trifft, in seiner Ausgangsstellung relativ zum Synchronring, in welcher die Nut zwischen den beiden Sperrflächen 50 am Rand der Ausnehmung 36 angreift. Beim Durchschalten verschiebt sich lediglich der andere Synchronring relativ zum Transmitter, während er geringfügig relativ zum nicht aktiven Synchronring verdreht wird. Das Druckstück 42 gleitet dabei auf dem gerade ausgeführten "Innenrand" der Mitnehmer 34. Wenn der entsprechende Gang wieder gelöst werden soll, nimmt die Transmitterscheibe 20 über die Löseschrägen 60 den entsprechenden Synchronring mit, bis dieser wieder in seine Ausgangsstellung gelangt. Die Löseschrägen 60 dienen darüber hinaus auch dazu, ein Entkoppeln der Mitnehmer vom Transmitter im geschalteten Zustand zu verhindern, da die Synchronringe axial nicht verbunden sind.

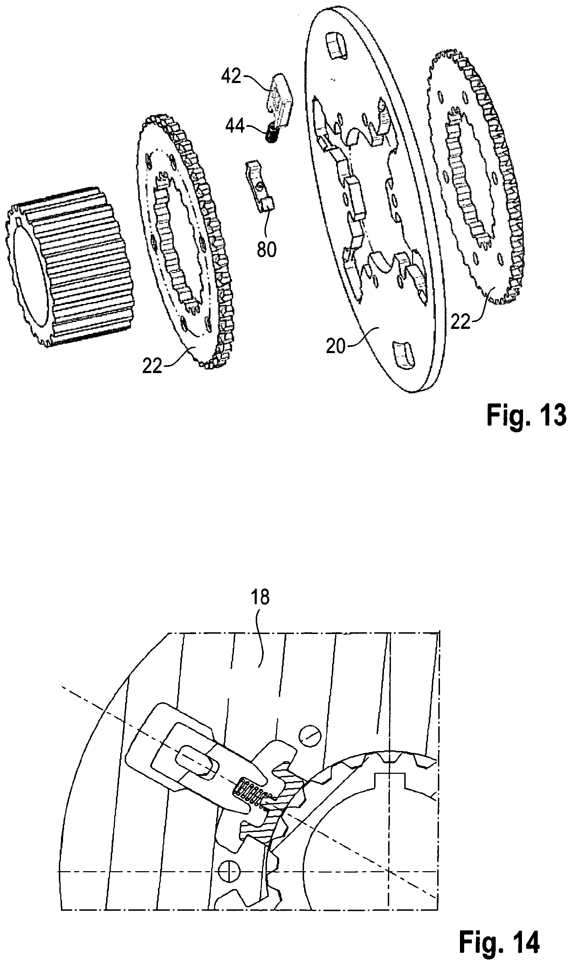

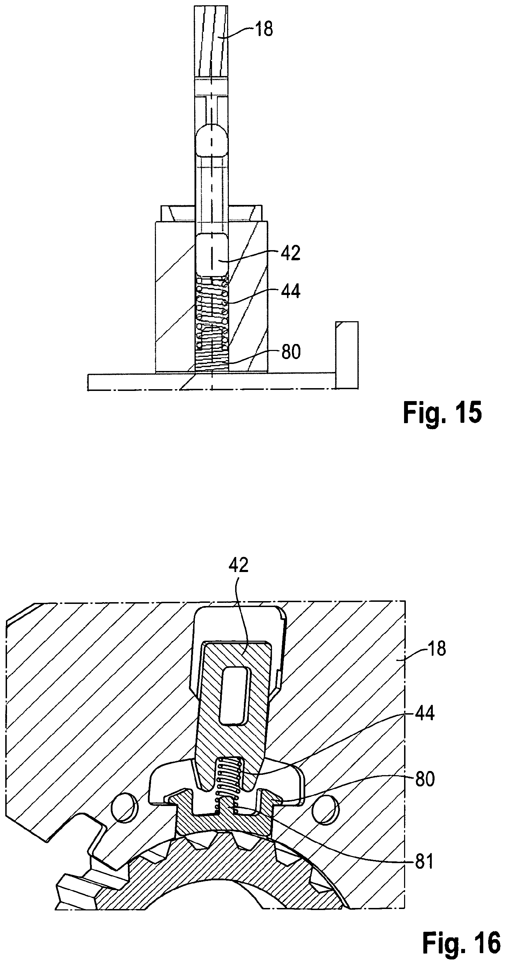

In den Figuren 13 bis 16 ist eine erfindungsgemässe dritte Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Die dritte Ausführungsform unterscheidet sich von den ersten beiden Ausführungsformen hinsichtlich der Ausgestaltung der Ausnehmung 36 für die Aufnahme der Druckstücke 42. Bei der dritten Ausführungsform ist die Ausnehmung 36 radial einwärts offen ausgeführt. Anders ausgedrückt weist die Ausnehmung im Transmitter keinen "Boden" auf, an dem sich die Feder 44 abstützt könnte. Stattdessen ist ein Widerlager vorgesehen, das hier durch einen Clip 80 gebildet ist. Der Clip stützt sich mit seinen beiden außenliegenden Rändern, die als Rastschultern ausgebildet sind, am Transmitter 18 ab, so dass die Ausnehmung 36 radial einwärts geschlossen ist. Am Clip 80 stützt sich die Feder 44 ab, wobei zur Fixierung der Feder ein Federdorn 81 am Clip 80 vorgesehen ist. Durch die radial einwärts offen ausgeführte Ausnehmung 36 ist die Montage der Druckstücke 42 und der Federn 44 im Transmitter vereinfacht.

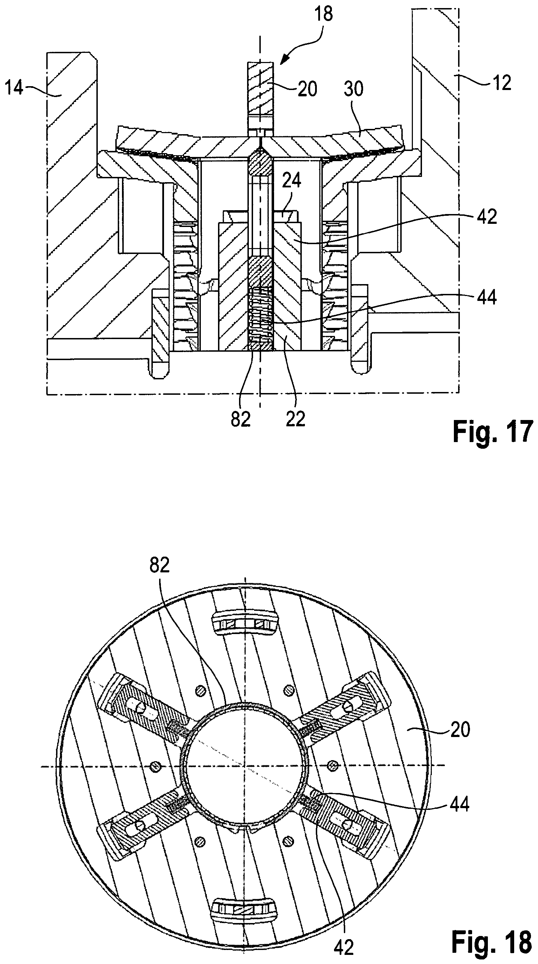

In den Figuren 17 bis 19 ist eine erfindungsgemässe vierte Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Die vierte Ausführungsform unterscheidet sich von der dritten Ausführungsform dadurch, dass das Widerlager für die Feder 44 durch einen Haltering 82 gebildet ist, der sich in Umfangsrichtung entlang dem Außenrand der Innenöffnung des Transmitters erstreckt und an dem die Federn 44 anliegen. Auch dies ermöglicht, die Druckstücke 42 in einfacher Weise im Transmitter 18 zu montieren. Aus Montagegründen ist der Haltering 82 vorzugsweise so ausgeführt, dass er elastisch am Außenrand der Innenöffnung anliegt.

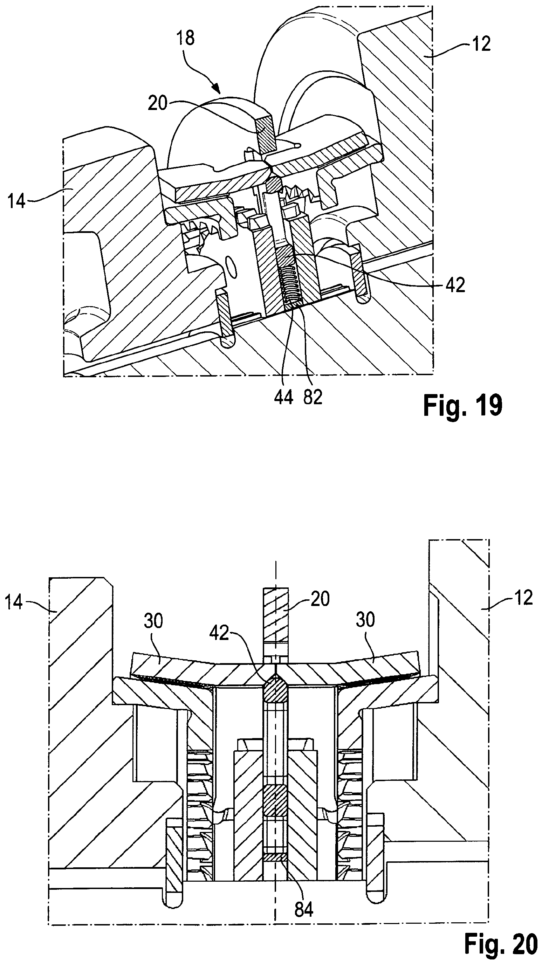

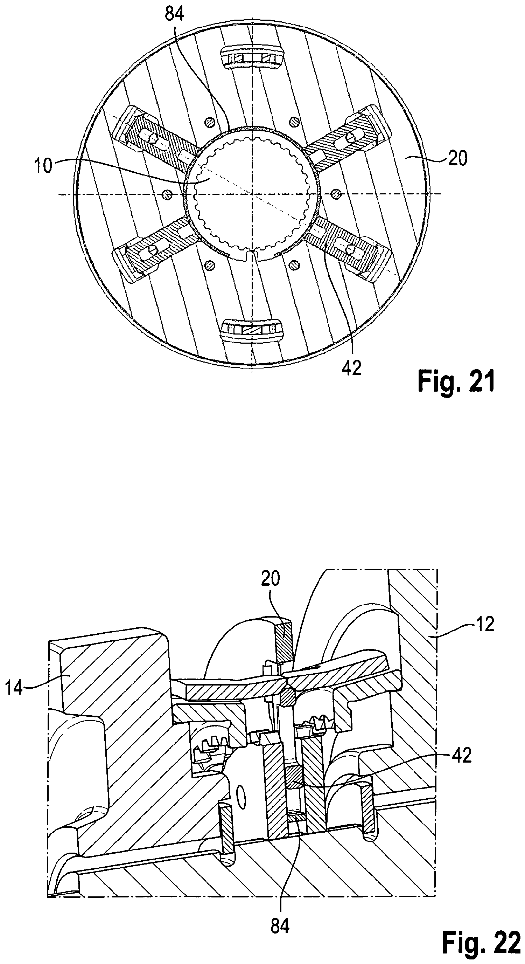

In den Figuren 20 bis 22 ist eine erfindungsgemässe fünfte Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Die fünfte Ausführungsform unterscheidet sich von der vierten Ausführungsform dadurch, dass die Federn 44 durch einen Federring 84 ersetzt sind, der elastisch am Außenrand der Innenöffnung des Transmitters anliegt. An dem Federring 84 stützen sich die Druckstücke 42 direkt ab. Im Unterschied zur vierten Ausführungsform ist radial innerhalb des Federrings 84 ein Freiraum zur Getriebewelle vorgesehen, der ein Einfedern des Federrings 84 ermöglicht. Dadurch kann auf die Federn, die bei der vierten Ausführungsform verwendet werden, verzichtet werden.

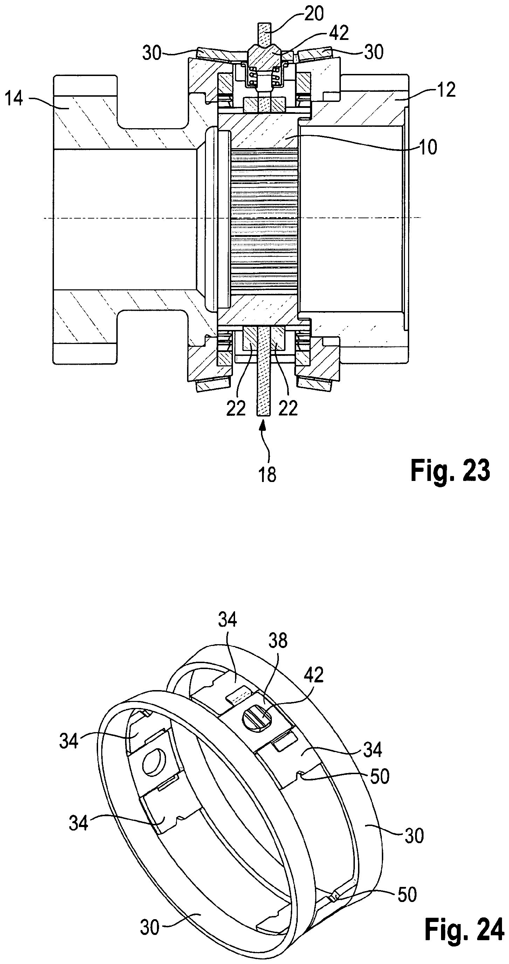

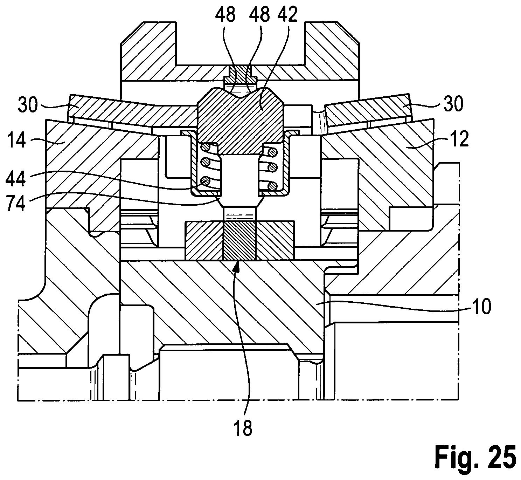

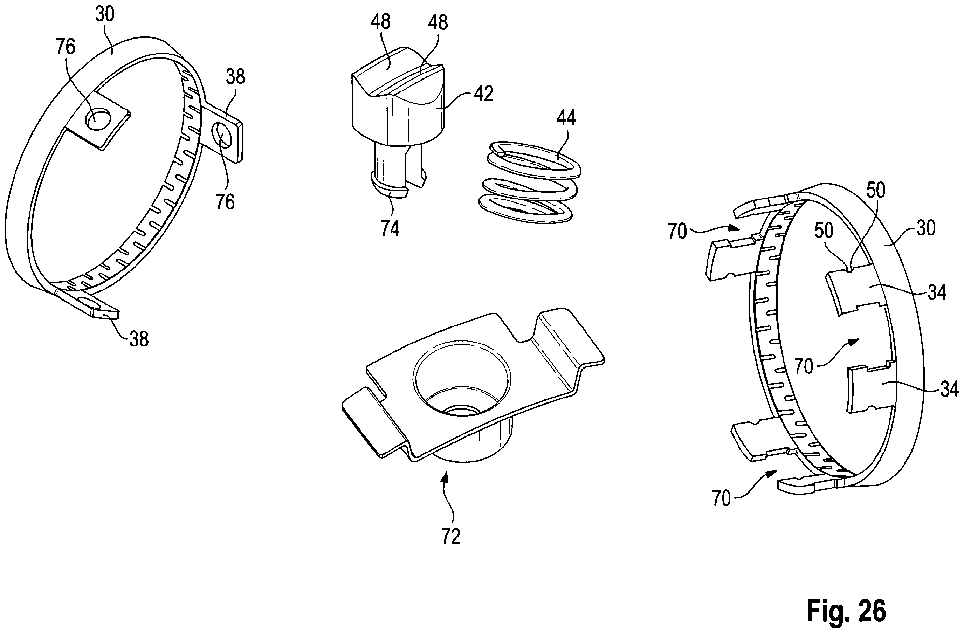

In den Figuren 23 bis 26 ist eine sechste Ausführungsform gezeigt. Für die von den vorhergehenden Ausführungsformen bereits bekannten Bauteile werden dieselben Bezugszeichen verwendet, und es wird insoweit auf die obigen Erläuterungen verwiesen.

Die sechste Ausführungsform ähnelt den vorhergehenden Ausführungsformen dahingehend, dass die beiden Synchronringe 30 in axialer Richtung miteinander gekoppelt sind. Zur Kopplung wird hier das Druckstück verwendet.

Einer der beiden Synchronringe 30 ist mit sechs Mitnehmern 34 versehen, die einander paarweise zugeordnet sind. Zwischen den einander zugeordneten Mitnehmern 34 ist eine Aufnahme 70 gebildet, in die ein Haltetopf 72 so eingehängt werden kann, dass er in axialer Richtung fixiert ist. Zu diesem Zweck ist die Aufnahme 70 in axialer Richtung hinterschnitten ausgeführt. Der Haltetopf 72 besteht aus Blech und weist eine Vertiefung auf, in der die Feder 44 zusammen mit dem Druckstück 42 montiert werden kann. Das Druckstück 42 ist dadurch im Haltetopf 72 geführt. Auf seiner Unterseite ist das Druckstück 42 mit einem Schnapphaken 74 versehen, mit dem es in einem Loch im Boden des Haltetopfes 72 unverlierbar fixiert werden kann.

Der zweite Synchronring 30 ist mit drei Verbindungslaschen 38 versehen, die jeweils mit einer Öffnung 76 versehen sind. Um die beiden Synchronringe miteinander zu verbinden, werden zunächst drei Haltetöpfe in die drei Aufnahmen 70 des mit den Mitnehmern 34 versehenen Synchronrings eingehängt. Dann wird der zweite Synchronring so am ersten angeordnet, dass dessen Verbindungslaschen 38 zwischen jeweils zwei einander zugeordneten Mitnehmern 34 zu liegen kommen; der Haltetopf 72 ist mit abgekröpften Halterändern ausgeführt, so dass die Mitnehmer 34 und die Verbindungslaschen 38 auf demselben Durchmesser angeordnet werden können. Schließlich werden das Druckstück 42 und die Feder 44 in den Haltetopf 72 eingesetzt, sodass das Druckstück 42 innerhalb der Öffnung 76 zu liegen kommt. Dadurch sind die beiden Synchronringe 30 sowohl in axialer Richtung als auch in Umfangsrichtung miteinander gekoppelt.

Im Unterschied zur ersten Ausführungsform sind bei der sechsten Ausführungsform die Vorsynchronisierschrägen 48 am Druckstück 42 ausgebildet, die somit in radialer Richtung mit dem Rand der Ausnehmung 36 in der Transmitterscheibe 20 zusammenwirken. Die Sperrflächen 50 sind bei der dritten Ausführungsform in gleicher Weise wie bei der zweiten Ausführungsform angeordnet, also einander V-förmig gegenüberliegend auf den Außenseiten der Mitnehmer 34.

Wenn ein Gang geschaltet werden soll, wird der Transmitter in axialer Richtung verschoben. Dabei nimmt er über eine der Vorsynchronisierschrägen 48 die beiden Synchronringe 30 mit, sodass einer von ihnen mit der entsprechenden Reibfläche 32 in Eingriff gelangt. Eine Drehzahldifferenz zwischen der Getriebewelle und dem zu schaltenden Gangrad sorgt dafür, dass die aus den beiden Synchronringen gebildete Baugruppe in Umfangsrichtung beaufschlagt wird, wodurch der V-förmige Einschnitt zwischen den beiden einander gegenüberliegenden Sperrflächen 50 gegen den Rand der Ausnehmung 36 gedrückt wird. Auf diese Weise ist ein Durchschalten des Transmitters verhindert, solange ein Reibmoment auf den entsprechenden Synchronring einwirkt. Erst wenn die Drehzahldifferenz beseitigt ist, gelingt es dem Transmitter, über die schräg ausgerichtete Sperrfläche 50 den Synchronring geringfügig zurückzudrehen, sodass der Transmitter durchgeschaltet werden kann.

Zum Lösen des Gangs wird der Transmitter 18 wieder in die Neutralstellung zurückbewegt, wobei er die aus den beiden Synchronringen 30 gebildete Baugruppe über das Druckstück 42 in die Neutralstellung zurückstellt.

## Patentansprüche

1. Transmitter (18) für eine Synchronisierungsbaugruppe eines Schaltgetriebes, mit einer Transmitterscheibe (20), einem Druckstück (42), einer Feder (44), die mit dem Druckstück (42) zusammenwirkt, und mindestens einem Synchronring (30), wobei das Druckstück (42) von der Feder (44; 84) so beaufschlagt wird, dass das Druckstück des Transmitters (18) in axialer Richtung eine Vorsynchronisierkraft auf den Synchronring (30) übertragen kann,
**dadurch gekennzeichnet, dass** der Synchronring (30) mit mindestens einem Mitnehmer (34) versehen ist, der sich in eine Ausnehmung (36) in der Transmitterscheibe (20) erstreckt und Sperrflächen (50) aufweist, die im Umfangsrichtung gesehen mit den Rändern der Ausnehmung (36) zusammenwirken können,
wobei Vorsynchronisierschrägen (48) an den freien Enden der Mitnehmer (34) auf der radial innen liegenden Seite gebildet sind, an der das Druckstück (42) unter Wirkung der Feder (44) angreifen kann, und
wobei das Druckstück (42) in Umfangsrichtung und in axialer Richtung im Transmitter (18) geführt und in der Ausnehmung (36) angeordnet ist, die in radialer Richtung einwärts geöffnet ist, und die Feder (44) sich an einem Widerlager (80) abstützt, das separat von der Transmitterscheibe (20) ausgeführt ist.

2. Transmitter nach Anspruch 1, **dadurch gekennzeichnet, dass** das Widerlager ein Haltering (82) ist, der in die Transmitterscheibe (20) eingesetzt ist.

3. Transmitter nach Anspruch 1, **dadurch gekennzeichnet, dass** das Druckstück (42) in der Ausnehmung (36) angeordnet ist, die in radialer Richtung einwärts geöffnet ist, und dass die Feder als Federring (84) ausgeführt ist, der in die Transmitterscheibe (20) eingesetzt ist.

4. Transmitter nach einem der vorhergehenden Ansprüche, **dadurch gekennzeichnet, dass** zwei Synchronringe (30) am Transmitter (18) angebracht sind.

5. Transmitter nach Anspruch 4,
**dadurch gekennzeichnet, dass** die beiden
Vorsynchronisierschrägen (48) der Synchronringe (30) in axialer Richtung schräg angestellt sind, dass die beiden Synchronringe (30) miteinander in axialer. Richtung verbunden sind und dass das Druckstück (42) in einer Ausgangsstellung an den beiden Vorsynchronisierschrägen (48) anliegt.

6. Transmitter nach Anspruch 4,
**dadurch gekennzeichnet, dass** an jedem
der Synchronringe (30) mindestens eine Verbindungslasche (38) vorgesehen ist, mittels denen die beiden Synchronringe (30) formschlüssig miteinander verbunden sind.

7. Transmitter nach Anspruch 4,
**dadurch gekennzeichnet, dass** die beiden
Synchronringe (30) in Umfangsrichtung verdrehbar am Transmitter (18) angebracht sind, dass sie zwei einander gegenüberliegend angeordnete Mitnehmer (34) aufweisen, an denen jeweils zwei Sperrflächen (50) vorgesehen sind, und dass das Druckstück (42) die beiden Mitnehmer (34) in Umfangsrichtung auseinanderdrückt, sodass die beiden Mitnehmer (34) in entgegengesetzten Richtungen am Transmitter (18) anliegen.

## Claims

1. A transmitter (18) for a synchronizing assembly of a manual transmission, comprising a transmitter disk (20), a thrust piece (42), a spring (44) which cooperates with the thrust piece (42), and at least one synchronizer ring (30), the thrust piece (42) being acted upon by the spring (44; 84) such that the thrust piece of the transmitter (18) can transmit a pre-synchronizing force to the synchronizer ring (30) in the axial direction,
**characterized in that** the synchronizer ring (30) is provided with at least one drive dog (34) which extends into a recess (36) in the transmitter disk (20) and includes locking surfaces (50) which, viewed in the peripheral direction, can cooperate with the edges of the recess (36),
pre-synchronizing slopes (48) being formed on the free ends of the drive dogs (34) on the radially inner side, which can be engaged by the thrust piece (42) under the action of the spring (44), and
the thrust piece (42) being guided in the transmitter (18) in the peripheral direction and in the axial direction and being arranged in the recess (36) which is opened inward in the radial direction, and the spring (44) being supported at an abutment (80) which is configured separately from the transmitter disk (20).

2. The transmitter according to claim 1, **characterized in that** the abutment is a holding ring (82) which is inserted in the transmitter disk (20).

3. The transmitter according to claim 1, **characterized in that** the thrust piece (42) is arranged in the recess (36) which is opened inward in the radial direction, and **in that** the spring is in the form of a spring washer (84) which is inserted in the transmitter disk (20).

4. The transmitter according to any of the preceding claims, **characterized in that** two synchronizer rings (30) are mounted at the transmitter (18).

5. The transmitter according to claim 4, **characterized in that** the two pre-synchronizing slopes (48) of the synchronizer rings (30) are positioned obliquely in the axial direction, **in that** the two synchronizer rings (30) are connected with each other in the axial direction, and **in that** in an initial position, the thrust piece (42) rests against the two pre-synchronizing slopes (48).

6. The transmitter according to claim 4, **characterized in that** each of the synchronizer rings (30) has at least one connecting tab (38) provided thereon by means of which the two synchronizer rings (30) are connected with each other with an interlocking fit.

7. The transmitter according to claim 4, **characterized in that** the two synchronizer rings (30) are mounted at the transmitter (18) for rotation in the peripheral direction, **in that** they include two drive dogs (34) which are arranged opposite each other and which each have two locking surfaces (50) provided thereon, and **in that** the thrust piece (42) pushes the two drive dogs (34) apart in the peripheral direction, so that the two drive dogs (34) rest against the transmitter (18) in opposite directions.

## Revendications

1. Transmetteur (18) pour un ensemble de synchronisation d'une boîte de vitesses, comportant un disque transmetteur (20), une pièce de poussée (42), un ressort (44) coopérant avec la pièce de poussée (42) et au moins une bague de synchronisation (30), la pièce de poussée (42) étant sollicitée par le ressort (44 ; 84) de telle sorte que la pièce de poussée du transmetteur (18) puisse transmettre une force de pré-synchronisation sur la bague de synchronisation (30) dans le sens axial,
**caractérisé en ce que** la bague de synchronisation (30) est pourvue d'au moins un entraîneur (34) qui s'étend dans un évidement (36) dans le disque transmetteur (20) et présente des faces de verrouillage (50) lesquelles, vues dans le sens périphérique, sont aptes à coopérer avec les bords de l'évidement (36),
des chanfreins de pré-synchronisation (48) étant réalisés aux extrémités libres des entraîneurs (34) du côté radialement intérieur lequel est apte à être engagé par la pièce de poussée (42) sous l'effet du ressort (44), et
la pièce de poussée (42) étant guidée dans le sens périphérique et dans le sens axial dans le transmetteur (18) et étant agencée dans l'évidement (36) qui est ouvert vers l'intérieur dans le sens radial, et le ressort (44) prenant appui sur une butée (80) qui est réalisée séparément du disque transmetteur (20).

2. Transmetteur selon la revendication 1, **caractérisé en ce que** la butée est une bague de retenue (82) insérée dans le disque transmetteur (20).

3. Transmetteur selon la revendication 1, **caractérisé en ce que** la pièce de poussée (42) est agencée dans l'évidement (36) qui est ouvert vers l'intérieur dans le sens radial, et **en ce que** le ressort est réalisé sous forme de bague ressort (84) insérée dans le disque transmetteur (20).

4. Transmetteur selon l'une des revendications précédentes, **caractérisé en ce que** deux bagues de synchronisation (30) sont montées sur le transmetteur (18).

5. Transmetteur selon la revendication 4, **caractérisé en ce que** les deux chanfreins de pré-synchronisation (48) des bagues de synchronisation (30) sont agencés en oblique dans le sens axial, **en ce que** les deux bagues de synchronisation (30) sont reliées l'une à l'autre dans le sens axial et **en ce que** la pièce de poussée (42) repose contre les deux chanfreins de pré-synchronisation (48) dans la position initiale.

6. Transmetteur selon la revendication 4, **caractérisé en ce que** sur chacune des bagues de synchronisation (30) il est prévu au moins une patte de raccordement (38) au moyen desquelles les deux bagues de synchronisation (30) sont reliées l'une à l'autre par coopération de formes.

7. Transmetteur selon la revendication 4, **caractérisé en ce que** les deux bagues de synchronisation (30) sont montées rotatives dans le sens périphérique sur le transmetteur (18), **en ce qu'**elles présentent deux entraîneurs (34) qui sont agencés opposés l'un à l'autre et sur lesquels il est prévu deux faces de verrouillages (50) respectives, et **en ce que** la pièce de poussée (42) pousse les deux entraîneurs (34) en éloignement l'un de l'autre dans le sens périphérique de sorte que les deux entraîneurs (34) repose sur le transmetteur (18) dans des sens opposés.
